# EUROPÄISCHE PATENTANMELDUNG

(11) **EP 3 788 884 A1**
(43) Veröffentlichungstag der Anmeldung: **10.03.2021**
(21) Anmeldenummer: 19195668.9
(22) Anmeldetag: 05.09.2019
(51) Int. Cl.: A23F 5/12, B65D 85/804, A23F 3/32, B65D 65/46, A23F 5/14

(54) **KOMPOSTIERBARE KAPSEL SOWIE DEREN HERSTELLUNG UND VERWENDUNG**

(71) Anmelder: Delica AG, 4127 Birsfelden (CH)
(72) Erfinder: Siefarth, Caroline, 4054 Basel (CH); Affolter, Roland, 5103 Möriken (CH); Brunschwiler, Christoph, 5400 Baden (CH); van den Bragt, Ralf, 4421 Sankt Pantaleon (CH); Yildirim, Selcuk, 8820 Wädenswil (CH); Miescher, Susanna, 8049 Zürich (CH); Faller, Annica, 8706 Meilen (CH)
(74) Vertreter: Hepp Wenger Ryffel AG

(57) **Zusammenfassung**

Kompostierbare Kapsel zur Zubereitung eines Getränks, insbesondere eines Heissgetränks, umfassend
- ein Kernmaterial, ausgewählt aus der Gruppe bestehend aus Kaffeepulver, Tee, Kakao, Trinkschokolade, Milchpulver, Instantkaffee und Trockensuppe und Kombinationen davon, und
- ein das Kernmaterial ummantelndes Hüllmaterial, wobei das Hüllmaterial ein kompostierbares, nicht-vernetztes Polysaccharid ist.

## Beschreibung

Die vorliegende Erfindung betrifft kompostierbare Kapseln, welche einen zur Herstellung eines Getränks, insbesondere eines Heissgetränks, geeigneten Inhaltsstoff aufweisen, sowie deren Herstellung und Verwendung.

Die Bereitstellung eines Genussmittels wie Kaffee in Kapselform ist hinlänglich bekannt. Die üblicherweise als Hüllmaterial eingesetzten Werkstoffe wie Kunststoffe oder Aluminium (vgl. z.B. EP-2 106 375 A2) weisen aber den Nachteil auf, dass sie nicht kompostierbar sind.

In der DE 10 2014 000187 B4 wurde vorgeschlagen, einen Pressling zur Herstellung von beispielsweise Kaffee mit einem Hüllmaterial aus einer biologisch abbaubaren Schicht zu ummanteln, wobei es sich bei dieser Schicht um ein Polysaccharid oder ein Derivat davon in Verbindung mit einem polyolen Spacer und einem zugehörigen Vernetzer handelt, d.h. ein vernetztes Polysaccharid. Ein konkretes Ausführungsbeispiel ist nicht beschrieben.

In der EP-3 115 316 B1 ist eine ähnliche Kapsel zur Herstellung von beispielsweise Kaffee beschrieben, wobei das vernetzte Polysaccharid im Hüllmaterial ohne die Verwendung eines polyolen Abstandshalters erhalten wurde. Konkret ist Calciumalginat als Hüllmaterial genannt.

In der US-2013/0136843 A1 wird vorgeschlagen, einen Kern aus Kaffeepulver mit einer Hülle aus verdichtetem Kaffee zu ummanteln.

Die vorstehend genannten Lösungen aus dem Stand der Technik sind noch nicht optimal im Hinblick auf die Bereitstellung einer kompostierbaren Kapsel zur Zubereitung eines Heissgetränks unter möglichst ökonomischen, ökologisch verträglichen und herstellungstechnischen Gründen.

Es war die Aufgabe der vorliegenden Erfindung, eine kompostierbare Kapsel zur Zubereitung eines Getränks, insbesondere eines Heissgetränks, bereitzustellen, welche die Nachteile des Stands der Technik überwindet.

Die Aufgabe wird durch den Gegenstand der unabhängigen Ansprüche der vorliegenden Anmeldung gelöst.

Im Einzelnen betrifft die vorliegende Erfindung eine kompostierbare Kapsel zur Zubereitung eines Getränks, insbesondere eines Heissgetränks, umfassend
- ein Kernmaterial, ausgewählt aus der Gruppe bestehend aus Kaffeepulver, Tee, Kakao, Trinkschokolade, Milchpulver, Instantkaffee und Trockensuppe und Kombinationen davon, und
- ein das Kernmaterial ummantelndes Hüllmaterial, wobei das Hüllmaterial ein kompostierbares, nicht-vernetztes Polysaccharid ist.

Gemäss der vorliegenden Erfindung soll unter "kompostierbar" verstanden werden, dass das Material gemäss den Zertifizierungsprogrammen NF T 51-800:2015-11-14 (Plastics - Specifications for plastics suitable for home composting) und AS 5810:2010 (Biodegradable plastics - Biodegradable plastics suitable for home composting) zumindest heimkompostierbar ist. Dies bedeutet eine Zersetzung (biodegradation) von mindestens 90% des Materials unter Freisetzung von CO₂ innerhalb von 12 Monaten bei einer Temperatur von 25±5 °C sowie eine Fragmentierung (desintegration) von mindestens 90% des Materials innerhalb von 6 Monaten bei einer Temperatur von 25±5 °C.

Die erfindungsgemässe Kapsel kann in ihrer Gestalt verschiedene Formen aufweisen. Eine Vielzahl solcher Formen sind im Stand der Technik für entsprechende Kapseln im relevanten technischen Gebiet bereits bekannt. So kann die Kapsel beispielsweise die Form eines Ellipsoids, eines Zylinders, eines Kegels, eines Kegelstumpfs, eines Quader, eines Würfels, einer Kaffeebohne oder einer Kugel aufweisen. Bevorzugt ist die Kapsel kugelförmig.

Die erfindungsgemässe Kapsel hat eine Kern-Hülle-Struktur, d.h. ein Kern aus einem Material (Kernmaterial) ist von einer Hülle aus einem anderen Material (Hüllmaterial) ummantelt. Die Hülle kann ohne Nahtstelle gebildet sein, wenn sie nicht (wie beispielsweise Hartkapseln) aus mehreren Teilen zusammengefügt wird. Die Hülle kann aber auch aus zwei oder mehreren Teilen gebildet sein. Die Hülle kann eine Schwächungslinie aufweisen, an welcher ein Öffnen der Hülle vereinfacht möglich ist.

Die erfindungsgemässe Kapsel kann einen Pressling als Kernmaterial enthalten. Unter einem "Pressling" wird gemäss der vorliegenden Erfindung ein Kernmaterial verstanden, das unter Druck verdichtet wurde. Die Bereitstellung des Kernmaterials der Kapsel als Pressling ist vorteilhaft, wenn das Kernmaterial erfindungsgemäss durch Eintauchen, Überziehen oder Besprühen mit dem erfindungsgemässen Hüllmaterial ummantelt wird, so dass es während des Ummantelungsvorgangs nicht zerfällt. Das Kernmaterial weist daher vorzugsweise eine bestimmte Festigkeit auf. Dies kann vorzugsweise dadurch erreicht werden, dass die Verdichtung des Kernmaterials mit einem Kompressionsdruck im Bereich von 1-100 MPa, bevorzugt 5-50 MPa, durchgeführt wird, sodass der resultierende Pressling eine Festigkeit im Bereich von 10-120 N, vorzugsweise 20-60 N aufweist.

Der zur Herstellung des Presslings anzulegende Kompressionsdruck ist abhängig von den Eigenschaften des Kernmaterials, im Fall von Kaffeepulver beispielsweise vom Mahlgrad, Röstgrad und Feuchtigkeitsgehalt des Pulvers. Insbesondere bei Kaffeepulver kann beobachtet werden, dass Pulver mit kleinerem Fett- oder Ölanteil, z.B. entkoffeiniertes Kaffeepulver, einen höheren Kompressionsdruck bedingt, um einen stabilen Pressling zu erzielen.

Die Festigkeit des Presslings wird bestimmt, indem der Pressling zwischen zwei Platten eingespannt und die erforderliche Kraft zum Zerstossen des Presslings bestimmt wird. Diese Methode ist auch in der WO 2008/123775 A1, S.3 beschrieben.

Gemäss der vorliegenden Erfindung ist das Kernmaterial ausgewählt aus der Gruppe bestehend aus Kaffeepulver, Tee, Kakao, Trinkschokolade, Milchpulver, Instantkaffee und Trockensuppe und Kombinationen davon. Derartige Kernmaterialien sind bekannt und müssen hier nicht näher erläutert werden. Feste und/oder quellbare Materialien haben sich als vorteilhaft gegenüber löslichen Materialien erwiesen, da sich bei der Getränkezubereitung das Material nicht auflöst und die Kapsel bis zum Abschluss der Getränkezubereitung ihre Form im Wesentlichen behält.

Das erfindungsgemäss zu verwendende Hüllmaterial ist ein kompostierbares, nicht-vernetztes Polysaccharid.

Unter einem nicht-vernetzten Polysaccharid ist ein Polysaccharid zu verstehen, dessen Polymerketten nicht, oder höchstens in Spuren, d.h. bis zu einem Vernetzungsgrad von 5%, vorzugsweise höchstens 2%, besonders bevorzugt höchstens 1%, mit Hilfe von Vernetzungsmitteln miteinander verknüpft sind.

Unter einer Verknüpfung von Polymerketten soll allgemein deren Verbindung miteinander mit Hilfe eines Vernetzungsmittels verstanden werden. Dies umfasst eine herkömmliche Vernetzung unter Ausbildung kovalenter Bindungen zwischen den Polymerketten und dem Vernetzungsmittel, aber auch eine koordinative Verknüpfung, bei welcher die Polymerketten lediglich eine ionische Wechselwirkung über ihre funktionellen Gruppen mit einem Vernetzungsmittel wie beispielsweise einem mehrwertigen Metallkation (wie Calciumionen) eingehen.

Eine Vernetzung des eingesetzten Polysaccharids kann dadurch verhindert werden, dass die zur Vernetzung erforderlichen Reaktionspartner (Vernetzungsmittel) nicht zugegeben werden und/oder die für eine Vernetzungsreaktion erforderlichen Reaktionsbedingungen (beispielsweise Anwesenheit eines erforderlichen Katalysators, eine für eine Vernetzung erforderliche Temperatur) nicht angewendet werden.

Das Hüllmaterial ist vorzugsweise derart ausgebildet, dass es sich bei der Getränkezubereitung, insbesondere bei der Zubereitung eines Heissgetränks nicht auflöst. Bei einer Extraktion mit bis zu 100 °C heissem Wasser und einer Extraktionszeit bis zu 3 min behält somit die Hülle eine stabile Form, so dass die Kapsel nach der Getränkezubereitung problemlos aus einer Getränkezubereitungsmaschine ausgeworfen oder entfernt werden kann.

Das kompostierbare, nicht-vernetzte Polysaccharid des Hüllmaterials kann ausgewählt sein aus der Gruppe bestehend aus Stärken, modifizierten Stärken, Pektinen, Cellulosen, Carrageenanen, Algin(at)en, Agar, Pullulan, Chitin, Chitosan und Kombinationen davon.

Erfindungsgemäss bevorzugt ist das kompostierbare, nicht-vernetzte Polysaccharid des Hüllmaterials ausgewählt aus der Gruppe bestehend aus Carboxymethylcellulose (CMC), Mikrofibrillierter Cellulose (MFC), Pullulan und Chitosan und Kombinationen davon.

Carboxymethylcellulose sowie mikrofibrillierte Cellulose weisen folgende Grundstruktur auf: 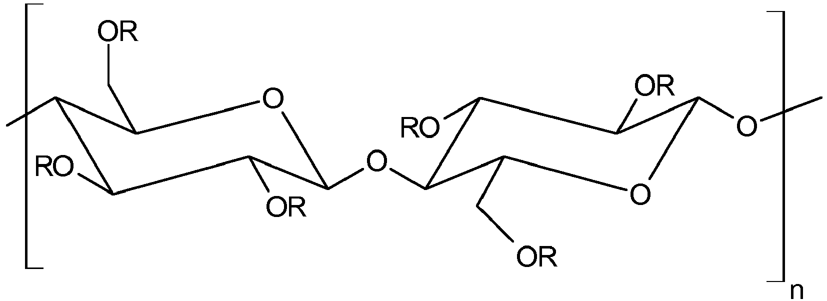 wobei im Fall der Carboxymethylcellulose R = CH₂COOH, H und im Fall der Cellulose R = H ist. n (d.h. die Anzahl miteinander in der Kette verbundener Monomere) ist üblicherweise so gewählt, dass die Carboxymethylcellulose ein Molekulargewicht im Bereich von etwa 10⁴ bis 10⁶ g/mol aufweist. Der Substitutionsgrad der Carboxymethylcellulose (d.h. der Anteil an Hydroxygruppen, welche mit einer Carboxymethylgruppe substituiert sind) sollte erfindungsgemäss bevorzugt im Bereich von 60-95% liegen.

Carboxymethylcellulose und Mikrofibrillierte Cellulose sind kommerziell erhältlich und ihre Herstellung ist bekannt.

Pullulan ist ein Polysaccharid mit folgender Struktur:

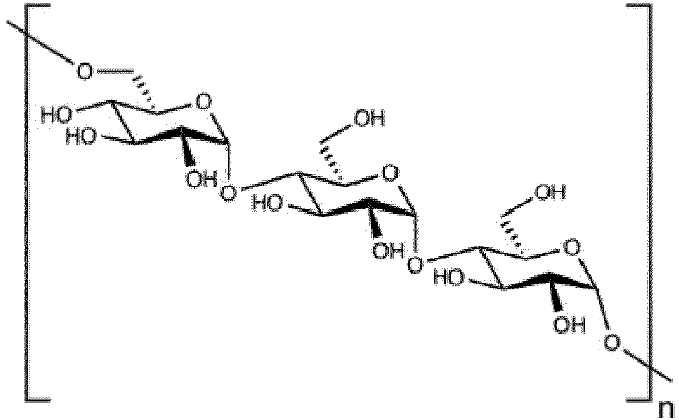

Pullulan und seine Herstellung ist bekannt. Pullulan ist kommerziell erhältlich.

Chitosan ist ein Polysaccharid mit folgender Struktur:

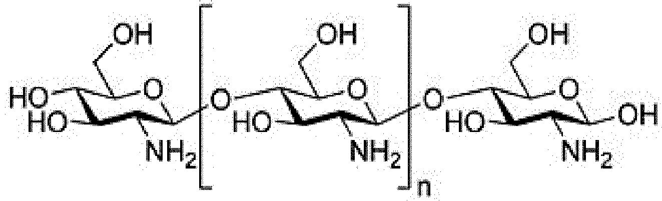

Der Wert für n beträgt üblicherweise etwa 2000. Chitosan und seine Herstellung ist bekannt. Chitosan ist kommerziell erhältlich.

Das kompostierbare, nicht-vernetzte Polysaccharid des Hüllmaterials kann zusätzliche Additive umfassen, um die Eigenschaften des Hüllmaterials zu modifizieren. Beispielsweise seien Weichmacher wie Glycerin, Sorbitol, Polyethylenglycol (PEG) oder einer Kombination dieser Weichmacher genannt.

Die Herstellung der erfindungsgemässen Kapsel kann auf übliche Weise erfolgen, indem ein Pressling des gewünschten Kernmaterials auf herkömmliche Weise mit dem Hüllmaterial ummantelt wird, insbesondere durch Eintauchen, Überziehen- oder Besprühen.

Die vorliegende Erfindung betrifft somit auch ein Verfahren zur Herstellung einer kompostierbaren Kapsel gemäss einem der vorhergehenden Ansprüchen, umfassend die Schritte
a) Bereitstellen eines Kernmaterials, ausgewählt aus der Gruppe bestehend aus Kaffeepulver, Tee, Kakao, Trinkschokolade, Milchpulver, Instantkaffee und Trockensuppe und Kombinationen davon,
b) Verdichten des Kernmaterials zu einem Pressling,
c) Bereitstellen eines Systems, insbesondere eines wässrigen Systems, umfassend ein kompostierbares, nicht-vernetztes Polysaccharid,
d) Aufbringen des Systems, insbesondere des wässrigen Systems, auf die Oberfläche des Presslings, insbesondere durch Eintauchen, Überziehen oder Besprühen,
e) Trocknen des beschichteten Presslings,
wobei das Verfahren unter nicht vernetzenden Bedingungen durchgeführt wird.

Das kompostierbare, nicht-vernetzte Polysaccharid kann ausgewählt sein aus der Gruppe wie vorgängig aufgelistet.

Das Verdichten des Kernmaterials in die Form eines Presslings ist bekannt und wurde bereits vorstehend beschrieben.

Die Bereitstellung eines Systems, insbesondere eines wässrigen Systems, umfassend ein kompostierbares, nicht-vernetztes Polysaccharid kann auf übliche Weise erfolgen, indem eine Lösung, insbesondere eine wässrige Lösung, mit dem entsprechenden Polysaccharid vermischt wird. Die Vermischung kann durch übliche Massnahmen wie Rühren, Erwärmen, Einstellung des pH-Bereichs zur Erhöhung der Löslichkeit des Polysaccharids, beispielsweise durch Zugabe einer Säure oder Base, oder einer Kombination derartiger Massnahmen unterstützt beziehungsweise ermöglicht werden.

Dabei wird unter einem System nicht nur ein wässriges System (d.h. ein ausschliesslich Wasser als Lösungsmittel umfassendes System) verstanden. Ebenso ist es denkbar, dass das System ein Lösungsmittelgemisch aus Wasser und einer wassermischbaren Lösung, beispielsweise aus niederkettigem (z.B. C₁₋₈), physiologisch akzeptablem Alkohol, wie Ethanol, ist.

Auf diese Weise wird ein System in Form einer Lösung, insbesondere einer wässrigen Lösung, mit einer Konzentration an kompostierbarem, nicht-vernetztem Polysaccharid zwischen 0,1% und 30% w/w, vorzugsweise zwischen 1% und 20% w/w, besonders bevorzugt zwischen 3% und 6% w/w, bereitgestellt, bezogen auf das Gesamtgewicht des Systems.

Erfindungsgemäss bevorzugt wird ein System in Form einer Lösung, insbesondere einer wässrigen Lösung, mit einer Konzentration an Carboxymethylcellulose zwischen 1% und 10% w/w, vorzugsweise zwischen 2% und 6% w/w, besonders bevorzugt zwischen 3% und 5% w/w, bereitgestellt, bezogen auf das Gesamtgewicht des Systems.

Erfindungsgemäss weiterhin bevorzugt wird ein System in Form einer Lösung, insbesondere einer wässrigen Lösung, mit einer Konzentration an mikrofibrillierter Cellulose zwischen 0,1% und 5% w/w, vorzugsweise zwischen 0,2% und 2% w/w, besonders bevorzugt zwischen 0,5% und 1,5% w/w, bereitgestellt, bezogen auf das Gesamtgewicht des Systems.

Erfindungsgemäss weiterhin bevorzugt wird ein System in Form einer Lösung, insbesondere einer wässrigen Lösung, mit einer Konzentration an Pullulan zwischen 1% und 30% w/w, vorzugsweise zwischen 5% und 30% w/w, besonders bevorzugt zwischen 15% und 20% w/w, bereitgestellt, bezogen auf das Gesamtgewicht des Systems.

Erfindungsgemäss weiterhin bevorzugt wird ein System in Form einer Lösung, insbesondere einer wässrigen Lösung mit einer Konzentration an Chitosan zwischen 1% und 20% w/w, vorzugsweise zwischen 1% und 10% w/w, besonders bevorzugt zwischen 3% und 8% w/w, bereitgestellt, bezogen auf das Gesamtgewicht des Systems.

Gemäss einer bevorzugten Ausführungsform wird für den Schritt der Bereitstellung eines wässrigen Systems umfassend ein kompostierbares, nicht-vernetztes Polysaccharid enthärtetes oder entmineralisiertes Wasser eingesetzt.

Das System kann zusätzliche Additive umfassen, um die Eigenschaften des aufzubringenden Hüllmaterials zu modifizieren. Beispielsweise seien Weichmacher wie Glycerin, Sorbitol, Polyethylenglycol (PEG) oder einer Kombination dieser Weichmacher genannt. Derartige Additive werden üblicherweise dem System in Mengen von 0,1 bis 8 % w/w, vorzugsweise 0,2 bis 3,6% w/w und besonders bevorzugt 0,5 bis 2% w/w zugegeben, bezogen auf das Gesamtgewicht des Systems.

Das derart bereitgestellte System kann auf übliche Weise auf die Oberfläche des Presslings aufgebracht werden, insbesondere durch Eintauchen, Überziehen oder Besprühen. Derartige Verfahren sind hinlänglich bekannt.

Erfindungsgemäss bevorzugt erfolgt die Ummantelung des gewünschten Kernmaterials mit dem Hüllmaterial durch Eintauchen des Presslings in das vorstehend beschriebene System. Beispielsweise kann der Pressling über eine geeignete Aufhängung in das System eingebracht werden, wo er für eine gewünschte Zeit verbleibt, beispielsweise für 1 bis 60 s, vorzugsweise 2 bis 30 s, besonders bevorzugt 3 bis 10 s. Andere Methoden zur Beschichtung in einem Tauchbad, beispielsweise mit einer festen Position im Tauchbad oder einer rollenden Fortbewegung durch das Tauchbad, sind denkbar.

Anschliessend wird der auf seiner Oberfläche mit Hüllmaterial umgebene (d.h. beschichtete) Pressling aus dem System entnommen.

Gemäss einer bevorzugten Ausführungsform der vorliegenden Erfindung ist das Hüllmaterial aus 1-20 Schichten, vorzugsweise 2-10 Schichten und besonders bevorzugt 2-5 Schichten aufgebaut, wobei die Schichten aus demselben oder unterschiedlichen kompostierbaren, nicht-vernetzten Polysacchariden aufgebaut sein können.

Sollte die Bereitstellung eines Hüllmaterials aus mehreren Schichten gewünscht sein, wird der Schritt des Beschichtens des Presslings wiederholt mit demselben System oder unterschiedlichen Systemen durchgeführt, um 1-20 Schichten, vorzugsweise 2-10 Schichten und besonders bevorzugt 2-5 Schichten, auf der Oberfläche des Presslings zu erzeugen. Die Art des Beschichtungsprozesses kann ebenfalls dieselbe sein, oder alternativ können unterschiedliche Beschichtungsprozesse herangezogen werden.

Der beschichtete Pressling wird nach dem letzten Beschichtungsschritt und/oder zwischen einem oder mehreren einzelnen Beschichtungsschritten einem Trocknungsprozess unterworfen. Diese Trocknung kann auf herkömmliche Art erfolgen. Erfindungsgemäss bevorzugt wird die Trocknung im Luftstrom, durch Konvektions- und/oder Kontakttrocknung durchgeführt. Beispielhaft seien Hordentrocknung mit Warmluft und IR-Trocknung (Trocknung durch Bestrahlung mit IR-Strahlung) genannt. Die hierfür angewendeten Temperaturen liegen bei Normaldruck üblicherweise im Bereich von 10 bis 40 °C, vorzugsweise 15 bis 25°C, in der Regel unterhalb 50°C.

Die Prozessschritte der Beschichtung und Trocknung benötigen zusammen üblicherweise eine Dauer von 2 bis 20 min, vorzugsweise 5 bis 10 min.

Gemäss einer Ausführungsform der vorliegenden Erfindung können die Beschichtung des Presslings und die anschliessende Trocknung in einem Prozessschritt durchgeführt werden, wenn die Beschichtung auf bekannte Weise durch eine Sprühbeschichtung in einem Wirbelschichtverfahren erfolgt. Die hierfür angewendeten Temperaturen liegen üblicherweise im Bereich von 25 bis 40 °C.

Das vorstehende erfindungsgemässe Verfahren wird unter nicht-vernetzenden Bedingungen durchgeführt. Wie vorstehend ausgeführt besteht das Hüllmaterial der erfindungsgemässen Kapsel aus einem nicht-vernetzten Polysaccharid, d.h. einem Polysaccharid dessen Polymerketten nicht, oder höchstens in Spuren, d.h. bis zu einem Vernetzungsgrad von 5%, vorzugsweise höchstens 2%, besonders bevorzugt höchstens 1%, mit Hilfe von Vernetzungsmitteln miteinander verknüpft sind.

Unter einer Verknüpfung von Polymerketten soll allgemein deren Verbindung miteinander mit Hilfe eines Vernetzungsmittels verstanden werden. Dies umfasst eine herkömmliche Vernetzung unter Ausbildung kovalenter Bindungen zwischen den Polymerketten und dem Vernetzungsmitteln, aber auch eine koordinative Verknüpfung, bei welcher die Polymerketten lediglich eine ionische Wechselwirkung über ihre funktionellen Gruppen mit einem Vernetzungsmittel wie beispielsweise einem mehrwertigen Metallkation (wie Calciumionen) eingehen.

Eine Vernetzung des eingesetzten Polysaccharids kann dadurch verhindert werden, dass unter nicht-vernetzenden Bedingungen gearbeitet wird. Darunter ist erfindungsgemäss zu verstehen, dass die zur Vernetzung erforderlichen Reaktionspartner (Vernetzungsmittel) nicht zugegeben werden und/oder die für eine Vernetzungsreaktion erforderlichen Reaktionsbedingungen (beispielsweise Anwesenheit eines erforderlichen Katalysators, für eine Vernetzung erforderliche Temperatur) nicht angewendet werden.

Die erfindungsgemässe Kapsel kann zur Zubereitung eines Getränks, insbesondere eines Heissgetränks, ausgewählt aus der Gruppe umfassend Kaffee, Tee, Kakao, Trinkschokolade, Milch oder Suppe, oder Kombinationen davon, verwendet werden.

Es ist erfindungsgemäss bevorzugt, dass die Zubereitung des Getränks durch Extraktion der kompostierbaren Kapsel mit einer insbesondere heissen Flüssigkeit ausgewählt aus der Gruppe bestehend aus Wasser und Milch erfolgt.

Entsprechende Zubereitungsverfahren und Vorrichtungen hierfür sind aus dem Stand der Technik bekannt.

### Beispiel:

Ein kugelförmiger Pressling für die Kaffeezubereitung wurde hergestellt durch Verdichten von 7 g geröstetem gemahlenem Kaffeepulver bei 30 MPa in einer Presse Das Kaffeepulver wies einen Feuchtigkeitsgrad von 3.5 % auf. Die mittlere Korngrösse des Kaffeepulvers betrug 400 µm ± 100 µm. Anschliessend wurde eine wässrige Lösung aus entmineralisiertem Wasser und Carboxymethylcellulose (CMC) (CMC sodium salt, medium viscosity, C4888, Sigma Aldrich, Schweiz) bereitgestellt. Dabei wurde ein System in Form einer wässrigen Lösung mit einer Konzentration an Carboxymethylcellulose (CMC) von 4% w/w bezogen auf das Gesamtgewicht der wässrigen Lösung hergestellt. Die Lösung wurde anschliessend mit 40% w/w Sorbitol (bezogen pro Gramm Trockengewicht CMC) versetzt. Der Pressling wurde 6 s in die wässrige CMC-Lösung eingetaucht und ca. 6 min bei 25 °C im Luftstrom getrocknet. Anschliessend wurde der Pressling ein zweites Mal für 6 s in die wässrige CMC-Lösung eingetaucht und wiederum ca. 6 min bei 25 °C im Luftstrom getrocknet.

## Patentansprüche

1. Kompostierbare Kapsel zur Zubereitung eines Getränks, insbesondere eines Heissgetränks, umfassend
- ein Kernmaterial, ausgewählt aus der Gruppe bestehend aus Kaffeepulver, Tee, Kakao, Trinkschokolade, Milchpulver, Instantkaffee und Trockensuppe und Kombinationen davon, und
- ein das Kernmaterial ummantelndes Hüllmaterial, wobei das Hüllmaterial ein kompostierbares, nicht-vernetztes Polysaccharid ist.

2. Kompostierbare Kapsel nach Anspruch 1, wobei das kompostierbare, nicht-vernetzte Polysaccharid des Hüllmaterials ausgewählt ist aus der Gruppe bestehend aus Stärken, modifizierten Stärken, Pektinen, Cellulosen, Carrageenanen, Algin(at)en, Agar, Pullulan, Chitin, Chitosan und Kombinationen davon, vorzugsweise ausgewählt aus der Gruppe Carboxymethylcellulose (CMC), Mikrofibrillierter Cellulose (MFC), Pullulan und Chitosan und Kombinationen davon.

3. Kompostierbare Kapsel nach Anspruch 1 oder 2, wobei das Hüllmaterial aus 1-20 Schichten, vorzugsweise 2 -10 Schichten und besonders bevorzugt 2-5 Schichten aufgebaut ist, wobei die Schichten aus demselben oder unterschiedlichen kompostierbaren, nicht-vernetzten Polysacchariden aufgebaut sind.

4. Kompostierbare Kapsel nach einem der Ansprüche 1 bis 3, wobei die Kapsel heimkompostierbar gemäss den Zertifizierungsprogrammen NF T 51-800 und AS 5810 ist.

5. Kompostierbare Kapsel nach einem der Ansprüche 1 bis 4, wobei die Kapsel kugelförmig ausgestaltet ist.

6. Kompostierbare Kapsel nach einem der Ansprüche 1 bis 5, wobei das das Kernmaterial ummantelnde Hüllmaterial keine Nahtstelle aufweist.

7. Kompostierbare Kapsel nach einem der Ansprüche 1 bis 6, wobei das das Kernmaterial ummantelnde Hüllmaterial eine Schwächungslinie aufweist, welche ein Öffnen der Kapsel vereinfacht.

8. Verfahren zum Herstellung einer kompostierbaren Kapsel, insbesondere gemäss einem der vorhergehenden Ansprüchen, umfassend die Schritte
a) Bereitstellen eines Kernmaterials, ausgewählt aus der Gruppe bestehend aus Kaffeepulver, Tee, Kakao, Trinkschokolade, Milchpulver, Instantkaffee und Trockensuppe und Kombinationen davon,
b) Verdichten des Kernmaterials zu einem Pressling,
c) Bereitstellen eines Systems, insbesondere eines wässrigen Systems, umfassend ein kompostierbares, nicht-vernetztes Polysaccharid,
d) Aufbringen des Systems auf die Oberfläche des Presslings, insbesondere durch Eintauchen, Überziehen oder Besprühen,
e) Trocknen des beschichteten Presslings,
wobei das Verfahren unter nicht vernetzenden Bedingungen durchgeführt wird.

9. Verfahren nach Anspruch 8, wobei der Schritt d) wiederholt mit demselben System oder unterschiedlichen Systemen, insbesondere wässrigen Systemen, durchgeführt wird, um 1-20 Schichten, vorzugsweise 2-10 Schichten und besonders bevorzugt 2-5 Schichten, auf der Oberfläche des Presslings zu erzeugen.

10. Verfahren nach Anspruch 8 oder 9, wobei das Verdichten des Kernmaterials mit einem Kompressionsdruck im Bereich von 1-100 MPa, bevorzugt 5-50 MPa, erfolgt.

11. Verfahren nach einem der Ansprüche 8 bis 10, wobei das wässrige System in Form einer wässrigen Lösung mit einer Konzentration an kompostierbarem, nicht-vernetztem Polysaccharid zwischen 0,1% und 30% w/w, vorzugsweise zwischen 1% und 20% w/w, besonders bevorzugt zwischen 3% und 6% w/w, bereitgestellt wird, bezogen auf das Gesamtgewicht des wässrigen Systems.

12. Verfahren nach einem der Ansprüche 8 bis 11, wobei das wässrige System zusätzlich einen Weichmacher, insbesondere Glycerin und/oder Sorbitol und/oder Polyethylenglycol, enthält.

13. Verfahren nach einem der Ansprüche 8 bis 12, wobei Schritt e) im Luftstrom, durch Konvektions- und/oder Kontakttrocknung durchgeführt wird.

14. Verwendung einer kompostierbaren Kapsel gemäss einem der Ansprüche 1 bis 7 zur Zubereitung eines Getränks, insbesondere Heissgetränks, ausgewählt aus Kaffee, Tee, Kakao, Trinkschokolade, Milch oder Suppe.

15. Verwendung nach Anspruch 14, wobei die Zubereitung des Getränks durch Extraktion der kompostierbaren Kapsel mit einer insbesondere heissen Flüssigkeit ausgewählt aus der Gruppe bestehend aus Wasser und Milch erfolgt.
